# EUROPEAN PATENT APPLICATION

(11) **EP 3 336 204 A1**
(43) Date of publication of application: **20.06.2018**
(21) Application number: 16835528.7
(22) Date of filing: 25.07.2016
(51) Int. Cl.: C21C 5/52

(54) **METHOD FOR MAKING STEEL IN AN ELECTRIC ARC FURNACE**

(30) Priority: 10.08.2015 RU 2015133714
(71) Applicant: Dorofeev, Genrikh Alekseevich, Tula 300001 (RU)
(72) Inventor: YANTOVSKY, Pavel Rudolfovich, Moskovskaya oblast g. Khimki 141407 (RU); SMIRNOV, Konstantin Gennadievich, Moskovskaya oblast g. Khimki 141400 (RU)
(74) Representative: Jeck, Anton
(86) International application number: PCT/RU2016/000476
(87) International publication number: WO 2017/026918

(57) **Abstract**

Die Erfindung bezieht sich auf die Metallurgie, und zwar auf ein Verfahren zur Stahlerzeugung im Lichtbogenofen. Das bekannte Verfahren zur Stahlschmelze im Lichtbogenofen umfasst mindestens eine Begichtung des Wärmeraums des Ofens mit festem Eisensatz und mindestens festem kohlenstoffhaltigen Material, Schmelzen des Beschickungsguts mittels der Lichtbögen und Kohlung des Metalls mittels fester kohlenstoffhaltiger Materialien im Laufe des Schmelzvorgangs sowie das Abstechen von Metall und Schlacke aus dem Ofen. Erfindungsgemäß wird vorgeschlagen, den Schmelzprozess unter Zugabe von hochgekohltem Karbonisiermittel in Form einer flüssigen Phase des in der Brennzone der Lichtbögen reduzierten Eisens im Wärmeraum des Ofens zu führen, um eine zusätzliche Metallkohlung zu erreichen. Dabei wird das hochgekohlte Karbonisiermittel aus Eisenoxiden und einem kohlenstoffhaltigen Material gewonnen. Eisenoxide und das kohlenstoffhaltige Material werden in die Brennzone der Lichtbögen eingebracht. Die Größe der Brennzone darf dabei D=d_{A}+6d_{el.} nicht überschreiten, wobei d_{A} der Durchmesser der Elektrodenauflösung und dei. der Elektrodendurchmesser sind. Der gesamte Kohlenstoffanteil im ungebundenen sowie im aufgelösten Zustand in der flüssigen Eisenphase beträgt max. 30%. Der gesamte Karbonisiermittelverbrauch pro Schmelze beträgt max. 20% der Eisensatzmasse. Das Karbonisiermittel wird in den Wärmeraum des Ofens kontinuierlich oder periodisch im Laufe des Schmelzvorgangs des Beschickungsguts eingebracht. Die Einbringung des Karbonisiermittels wird gleichzeitig mit dem Schmelzen des Beschickungsguts begonnen. Durch die Anwendung der Erfindung wird die Ausbeute des flüssigen Metalls dank der Regelung des Kohlenstoffanteils im Laufe des Schmelzvorgangs, der Steigerung des Metallkohlungsgrads sofort ab Schmelzbeginn sowie der Verminderung des Eisenabbrands zur Schlacke und zum Rauch erhöht.

## Description

Die Erfindung bezieht sich auf die Metallurgie und zwar auf Verfahren zur Stahlerzeugung im Lichtbogenofen (LBO).

Aus dem Stand der Technik ist ein Verfahren zur Stahlschmelze im Lichtbogenofen bekannt, bei dem zuerst das Beschickungsgut geschmolzen wird und dann zwei weitere Phasen, und zwar eine Oxidationsperiode und eine Reduktionsperiode, folgen. Die Hauptaufgabe der Oxidationsperiode ist die Entfernung des größten Anteils an Phosphor in die Schlacke. Dafür werden feste Oxidationsmittel - meistens Eisenerz - verwendet. Die erhaltene Schlacke wird nach Möglichkeit völlig dem Ofen entnommen und mittels Kalk und Schamotte erneut. Unter dieser Schlacke wird das Metall erwärmt und der Kohlenstoff wird bis zu einer Sollgrenze oxidiert.

Vor der Reduktionsperiode wird die Schlacke im Ofen völlig gewechselt. Es wird eine neue eisenfreie Schlacke mit Hilfe von Kalk- und Fluoritzusatzstoffen zubereitet. Diese neue Schlacke wird mit Kohlenstoff, Silizium und Aluminium beruhigt, um den Schwefel aus dem Metall maximal zu entfernen. Danach wird der Stahl - vorwiegend im Ofen - legiert und beruhigt. Dieses Verfahren begrenzte die Ofenleistung und die Stahlqualität [Elektroverhüttung von Stahl und Ferrolegierungen. D.Ya. Povolotsiy, V.E. Roshhin, M.A.Ryss, A.I.Stroganov, M.Ya.Yartsev. Lehrmittel. Moskau. «Metallurgiya».1974, S. 213-276].

In den letzten Jahrzehnten wurde ein neues und wirksameres Stahlerzeugungsverfahren entwickelt. Es beruht auf einer weiten Ausnutzung von Industriesauerstoff und kohlenstoffhaltigen Materialien, um einen längeren Elektroschmelzprozess - die Schmelzperiode - zu intensivieren [A.N. Morozov. Moderne Stahlgewinnung in Lichtbogenöfen.- 2. Auflage, Chelyabinsk: Metallurgiya, 1987,175 S.]. Eine weitere Besonderheit des neuen Verfahrens ist die Verlagerung der meisten verfahrenstechnischen Schritte - Entschweflung, Legierung und Beruhigung, und in manchen Fällen auch Entkohlung - aus dem Ofen in die Pfanne der Sekundärmetallurgieanlage [A.N. Morozov. Moderne Stahlgewinnung in Lichtbogenöfen. 2. Auflage, Chelyabinsk: Metallurgiya, 1987,175 S. Innovative Entwicklung der Elektrostahlproduktion. A.G. Shalimov, A.E. Semin, M.P. Galkin, K.L. Kossyrev. Monographie. M.: Metallurgisdat, 2014, 308 S.]. Zurzeit ist dieses Schmelzverfahren sehr verbreitet und dominiert unter den Stahlerzeugungsverfahren in LBO [A.N. Morozov. Moderne Stahlgewinnung in Lichtbogenöfen. 2. Auflage, Chelyabinsk: Metallurgiya, 1987, 175 S.].

Eine der Arten der modernen Stahlschmelzverfahren ist das Verfahren unter Verwendung von synthetischen Verbundstoffen ganz verschiedener Zusammensetzungen, z. B. von Verbundstoffen auf Gusseisen- und Eisenoxidbasis (Kunstverbundstoffe) bis zu kohlenoxidhaltigen Stoffen [Yu.A. Bondarev, G.N. Elanskiy, V.I. Lemyakin et al. Erfahrung der Durchführung von Schmelzverfahren in elektrischen Öfen unter Verwendung von kohlenoxidhaltigen Briketts. Werke des 5. Stahlschmelzertages. - M.: Chermetinformatsiya, 1999, 218 S.].

Aus dem Stand der Technik ist auch ein Verfahren zur Stahlschmelze im Lichtbogenofen bekannt, das folgende Schritte einschließt: Füllung des Ofens; Begichtung (Einsetzen) mit Metallschrott, direkt reduziertem Eisen, eisen- und kohlenstoffhaltigen Stoffen, Flussmitteln; Zufuhr eines festen kohlenstoffhaltigen Materials (KSM) zusammen mit einem ersten Satz des Beschickungsguts (ersten Kübels oder Korbs); Elektrodennachsetzen und -wechsel; ggf. zusätzliches Einsetzen des Beschickungsguts; Zuführung von Strom, Brennstoff, gasförmigem Sauerstoff, Flussmitteln, zerkleinertem KSM zum Schäumen der Schlacke; Schmelzen des Beschickungsguts, ggf. zusätzliche Zufuhr von KSM durch eine Öffnung im Ofengewölbe nach Anfang des Schmelzvorgangs; Kohlung (Karbonisierung) des Metalls im Schmelzprozess, Erwärmung und Entkohlung des Metallbads; Abschlackung, Abstechen des Metalls (Halbprodukts) aus dem Ofen [G.A. Dorofeev, P.R. Litovskiy, Ya.M. Stepanov et al. Energieeffizienz der Lichtbogenstahlschmelzöfen und Aussichten der Anwendung von verfahrenstechnischen Verbundstoffen. Werke des 13. Stahlschmelzertages. - Moskau - Polevskoy.2014, S. 87-92].

Aus dem Erfinderzertifikat Nr. 1435614 ist auch ein Stahlschmelzverfahren bekannt (Schutzrechtsschrift Nr. (s. o.), Priorität vom 14.07.1986, Veröffentlichungsdatum 07.11.1988). Nach diesem bekannten Stahlschmelzverfahren werden flüssige Harze oder Peche der Schmelze während des Schmelzvorgangs zugeführt, die durch die Strömung des Trägergases dispergiert sind. Der Trägergasverbrauch in der Karbonisieranlage variiert in einem Bereich zwischen 0,3 und 25 kg/m³. Während der Kohlung wird das Metall erhitzt, seine Gassättigung nimmt ab.

Jedoch kommt der Kohlungsprozess nur unter der Voraussetzung des vollständigen Aufschmelzens des Beschickungsguts zustande, und zwar in der flüssigen Schmelzperiode, die für moderne Öfen sehr kurz ist. Sie dauert ca. 10 Minuten, und darauf entfallen ca. 15 - 20% der gesamten Schmelzzyklusdauer. Daher verläuft der Hauptteil des Schmelzvorgangs unter Bedingungen des fehlenden Aufkohlmittels im Metall. Das vermindert die Wirksamkeit des Verfahrens. Der niedrigere Kohlenstoffaufnahmegrad aus dem in die Schmelze eingeblasenen flüssigen Karbonisiermittel - Harz oder Pech - ist dadurch bedingt, dass ein wesentlicher Teil dieses Mittels durch die zurückgeworfene Gasströmung auf die Metallbadoberfläche ausgetragen wird. Dadurch wird der Verbrauch des Karbonisiermittels erhöht.

Das flüssige Harz oder Pech zeichnet sich durch eine beachtliche Zähigkeit aus und muss bei der Anwendung als Karbonisiermittel erwärmt werden. Das macht die Konstruktion von LBO und das Schmelzverfahren viel komplizierter. Aus diesem Grund ist das Stahlschmelzverfahren mit Kohlung mittels Zufuhr von Harz oder flüssigem Pech nicht verbreitet.

Der nächstliegende Stand der Technik gegenüber der beanspruchten Erfindung dem technischen Wesen nach ist das durch das Patent RU 2539890 bekannte Verfahren zur Stahlschmelze im Lichtbogenofen (Patentschrift RU 2539890 vom 30.12.2013, EPC C21C 5/52, veröffentlicht am 27.01.2015). Nach diesem Verfahren wird der Wärmeraum des Ofens mit dem Beschickungsgut begichtet. Das Beschickungsgut besteht aus Metallschrott und agglomeriertem (stückiggemachtem) kohlenoxidhaltigen Material. Dem Ofen werden Strom, Brennstoff, Aufkohlmittel, Flussmittel und gasförmiger Sauerstoff zugeführt. Das Beschickungsgut wird mittels Lichtbögen erwärmt und geschmolzen. Das Metallbad wird entkohlt. Danach folgt das Abstechen des Metalls und der Schlacke. Die Zentralzone des Ofens grenzt an die Brennzone der Lichtbögen an. Ihre Maße betragen max. D=(d_{A}+3,5dₑₗ.), wobei d_{A} der Durchmesser der Elektrodenauflösung und d_{el.} der Durchmesser der Elektroden ist. Bevor das Schmelzen beginnt, wird die Zentralzone des Ofens gleichzeitig zusammen mit dem ersten Satz des Eisensatzes auch mit dem kohlenoxidhaltigen Material begichtet. Die Menge des kohlenoxidhaltigen Materials beträgt 10 bis 90% der Gesamtverbrauchsmenge pro Schmelze. Der Rest des kohlenoxidhaltigen Materials wird dem aufgeschmolzenen Beschickungsgut während des Schmelzvorgangs zugeführt. Die spezifische Einbringungsgeschwindigkeit liegt zwischen 0,5 und 10 kg/min. pro 1 MVA der Transformatorleistung des Lichtbogenofens. Dabei wird die Größe der Stücke des kohlenoxidhaltigen Materials zwischen 5 und 80 mm gewählt. Die Wände des Ofengefäßes sind mit mindestens drei umlaufend abstehenden Öffnungen für die Einbringung des kohlenoxidhaltigen Materials in die Zentralzone des Ofens versehen. Die Öffnungen liegen um 0,2 bis 1,0 m unterhalb der oberen Höhenmarke des Ofengefäßes. Die Erfindung ermöglicht es, den spezifischen Stromverbrauch für das Aufschmelzen des Eisensatzes zu vermindern und die Eisenausbeute aus dem kohlenoxidhaltigen Material zu erhöhen. Es wird auch die relative Menge der kohlenoxidhaltigen Stoffe in der Gesamtmasse des Beschickungsguts vergrößert.

Das bekannte im LBO durchgeführte Stahlschmelzverfahren hat folgende Mängel:
1. Die Lösung des Kohlenstoffs im Metall, der während der Schmelzperiode im Ofen entsteht, setzt vollständiges Aufschmelzen des festen Beschickungsguts und der vorherigen Bildung des flüssigen Metallbads voraus. Das verlangsamt den Metallkohlungsvorgang und verschiebt die Kohlung an das Ende der Schmelzperiode. In Kombination mit individuellen Eigenschaften und physikalisch-chemischen Besonderheiten des KSM, die seine Lösung im flüssigen Eisen erschweren, begrenzt das den möglichen Gehalt von Kohlenstoff im flüssigen Eisen.
   Eine zusätzliche ungünstige Einflussgröße ist, dass der Kohlenstoffaufnahmegrad dabei niedriger ist und bei max. 50% liegt. Das ist dadurch bedingt, dass das KSM im Ofen teilweise verbrennt. Folglich geht der Kohlenstoffanteil am Ende des Schmelzvorgangs noch mehr zurück - bis auf 0,03 - 0,05%. Das ist besonders bei LBO der neuesten Generation der Fall, denn sie laufen mit einem erhöhten gasförmigen Sauerstoffverbrauch (35 - 45 m³/t). Der niedrige Kohlenstoffgehalt im Metall vor dem Abstechen erhöht wesentlich den Eisenabbrand und vermindert die Gutmetallausbeute um 1 bis 4%.
2. Der Übergang von Kohlenstoff aus KSM in flüssiges Eisen und die eigentliche Kohlung des Metalls durch die Lösung von Kohlenstoff im Eisen enden erst zum Abschluss des vollständigen Aufschmelzens des Ausgangs-Eisensatzes und wenn die Schmelze eine Temperatur zwischen 1520 und 1570°C erreicht. Zu diesem Zeitpunkt dauert es nur 6 bis 10 Min. bis zum Ende des Schmelzvorgangs und Abstechens. Aus diesem Grund entwickelt sich die Metallentkohlung während der längsten und energieintensivsten Schmelzperiode (d. h. während das Beschickungsgut geschmolzen wird, was die größte Zeit des Schmelzvorgangs - 20 bis 35 Minuten - in Anspruch nimmt) nur gering. Dementsprechend wird kein ordentliches Sieden und Vermengen von Metall und Schlacke erreicht, das die Aufnahme der Lichtbogenenergie durch das Bad sowie die Metallerhitzungsgeschwindigkeit erhöht. Folglich nimmt auch der spezifische Stromverbrauch für das Stahlschmelzen im LBO zu.

Somit liegt dem bekannten Verfahren die Kohlung des Metalls mit festem KSM zugrunde. Die genannten Mängel des Verfahrens beeinträchtigen im Endeffekt die genannten Kenndaten des Stahlschmelzens im LBO. Folglich muss das Problem der effizienten Kohlung des Metalls gelöst werden.

Der technische Effekt der beanspruchten Erfindung umfasst:
- die Erhöhung der Ausbeute des flüssigen Metalls durch die Regelung des Kohlenstoffanteils im Laufe des Schmelzvorgangs, die Steigerung des Kohlungsgrads bereits sofort ab Schmelzbeginn und die Verminderung des Eisenabbrands zur Schlacke und Rauch;
- die Verminderung des spezifischen Stromverbrauchs für das Stahlschmelzen im LBO dank der zusätzlichen Stahlkohlung, ohne dass der Energieverbrauch für die Vorbereitung des flüssigen Karbonisiermittels (Aufkohlmittels) erhöht wird, und dank der ununterbrochenen Entkohlung des Metallbads während des gesamten Schmelzvorgangs, einschließlich der Schmelzperiode, wenn das Metallbad noch festflüssig ist und wenig erwärmt wird;
- einen niedrigeren Sauerstoffanteil im Metall. Das wird dank der Regelung des Kohlenstoffanteils im Laufe des Schmelzvorgangs und der Steigerung des Metallkohlungsgrads sofort ab Schmelzbeginn erreicht, das heißt, ab Anfang der Schmelzperiode, ohne dass der Verbrauch des festen, dem Ofen zusammen mit dem Metallbeschickungsgut zugeführten KSM für das Schmelzen erhöht ist.

Die Kohlung (Karbonisierung) des Metalls nach dem beanspruchten Stahlschmelzverfahren erfolgt unter Anwendung einer flüssigen Kohlenstofflösung. Die Kohlenstofflösung wird dem direkt reduzierten Eisen zugeführt und nicht der Beschickung, wie es bei dem bekannten Verfahren der Fall ist. Das direkt reduzierte Eisen entsteht aus dem dem Ofen zugeführten Material unmittelbar im LBO während des Schmelzens des Ausgangseisensatzes. Dieses Material enthält Eisenoxide und Kohlenstoff als Reduktionsmittel. Die Auflösung des KSM im Eisen nimmt viel Zeit in Anspruch. Die Verwendung der hochgekohlten Eisenschmelze im flüssigen Zustand anstatt des festen KSM beschleunigt wesentlich die Kohlung des Metalls. Da der Kohlenstoff in der Metallschmelze ab Anfang des Schmelzvorgangs enthalten ist, wird eine frühe und intensive Oxidation des Kohlenstoffs sichergestellt. Das infolge der Entkohlung gebildete Kohlenoxid verursacht Bläschenbildung, Sieden und Vermengung von Metall und Schlacke. Diese Einflussgrößen steigern den Wärmeaufnahmegrad und beschleunigen die Erwärmung des Metalls, wodurch der Energieverbrauch abnimmt. Gleichzeitig lässt der Eisenabbrand zu Schlacke und Rauch nach, so dass die Ausbeute an Gutprodukt größer wird. Aus diesen Größen sind diese Einflussgrößen von einer besonderen Bedeutung, denn der Schmelzvorgang wird unter kontinuierlichem Sieden des Metallbads - ab Anfang des Anschmelzens des Beschickungsguts und bis zum Schmelzabschluss - geführt.

Um den genannten technischen Effekt zu erreichen, wird die gestellte Aufgabe wie folgt gelöst. Das Verfahren zur Stahlschmelze im Lichtbogenofen umfasst mindestens folgende Schritte: Begichtung des Wärmeraums des Ofens mit festem Eisensatz und mindestens festem kohlenstoffhaltigen Material, Schmelzen des Beschickungsguts mittels der Lichtbögen und Kohlung des Metalls mit festem kohlenstoffhaltigen Material im Laufe des Schmelzvorgangs, Abstechen des Metalls und der Schlacke aus dem Ofen. Der Schmelzvorgang wird unter Zugabe eines hochgekohlten Karbonisiermittels im Wärmeraum des Ofens durchgeführt, um die zusätzliche Kohlung des Metalls zu erzielen. Das Karbonisiermittel wird in Form der flüssigen Phase des in der Brennzone der Lichtbögen reduzierten Eisens zugegeben. Dabei wird das hochgekohlte Karbonisiermittel aus Eisenoxiden und einem kohlenstoffhaltigen Material gewonnen.

Um den besten technischen Effekt zu erreichen, ist es sinnvoll, dass
- der gesamte Kohlenstoffanteil im ungebundenen sowie im aufgelösten Zustand in der flüssigen Eisenphase max. 30% beträgt;
- der gesamte Karbonisiermittelverbrauch pro Schmelze max. 20% der Eisensatzmasse beträgt;
- die Eisenoxide und das kohlenstoffhaltige Material der Brennzone der Lichtbögen zugeführt werden; die Größe der Brennzone darf dabei D=d_{A}+6d_{el.} nicht überschreiten, wobei d_{A} der Durchmesser der Elektrodenauflösung und dei. der Elektrodendurchmesser sind;
- das Karbonisiermittel dem Wärmeraum des Ofens kontinuierlich oder periodisch im Laufe des Schmelzvorgangs des Beschickungsguts zugeführt wird;
- der Anfang der Karbonisiermittelzuführung mit dem Anfang des Schmelzvorgangs des Beschickungsguts zusammenfällt;
- Eisenoxide und das kohlenstoffhaltige Material der Brennzone der Lichtbögen gleichzeitig zugeführt werden;
- Eisenoxide und das kohlenstoffhaltige Material vor dem Einbringen in den Ofen zuerst vermengt und dann in Form von einem dichten Gemisch zugeführt werden;
- Eisenoxide und das kohlenstoffhaltige Material vor dem Einbringen in den Ofen vorher stückig gemacht und im agglomerierten Zustand zugeführt werden;
- die Teilchengröße der Eisenoxide und des kohlenstoffhaltigen Materials vor dem Einbringen in den Ofen max. 25 mm beträgt;
- der gesamte Kohlenstoffanteil im ungebundenen sowie im aufgelösten Zustand in der flüssigen Eisenphase mind. 2% beträgt;
- der gesamte Karbonisiermittelverbrauch pro Schmelze mind. 20% der Eisensatzmasse beträgt.

Die zusätzliche Kohlung des Metalls im Schmelzprozess wird parallel und gleichzeitig mit den bestehenden Verfahren durchgeführt, und zwar Kohlung mit festen KSM. Das bestehende Kohlungsverfahren umfasst die Zufuhr von KSM zum Beschickungsgut, die Beschickung des Ofens, das Aufschmelzen des Beschickungsguts und die Lösung des Kohlenstoffs im Metall. Die Kombination von zwei Kohlungsverfahren sorgt dafür, dass eine frühere Metallkohlung erreicht wird. Somit wird die benötigte Kohlenstoffkonzentration bereits am Anfang des Schmelzvorgangs und beim Entstehen von den ersten Mengen des geschmolzenen Metalls erreicht. Die Oxidation von Kohlenstoff und die Kohlenoxid-Bläschenbildung werden von der Vermengung des Metalls und der Schlacke im Laufe der gesamten Schmelzperiode von Beginn und bis zum Ende des Schmelzprozesses begleitet. Das vermindert die Energiekosten und erhöht die Eisenausbeute aus dem Beschickungsgut.

Die vorgeschlagene technische Lösung sieht auch die Möglichkeit der Zuführung der Ausgangsstoffe zur heißesten Zentralzone und zu den im Beschickungsgut entstehenden Freiräumen - sogenannten Brunnen - vor. Die Brunnen zeichnen sich durch die höchste Energiekonzentration sowie durch besonders hohe Temperaturen aus. Diese Faktoren tragen auch dazu bei, dass das direkt reduzierte Eisen schnell entsteht, seine Kohlung früher beginnt und dass eine hochgekohlte Eisenschmelze gewonnen wird. Die hochgekohlte Eisenschmelze dient als "flüssiges" Aufkohlmittel. Dabei gehen diese Prozesse unmittelbar im LBO während des Schmelzvorgangs vor sich. Auch der gesamte Kohlungsprozess wird beschleunigt.

Anstelle von festem KSM wird die flüssige Kohlenstofflösung als Aufkohlmittel im Eisen verwendet. Die flüssige Kohlenstofflösung entsteht dabei im Schmelzprozess des Beschickungsguts. Das macht es möglich, eine frühere Kohlung der geschmolzenen Masse sicherzustellen, die sich aus dem festen Eisensatz sofort ab Schmelzbeginn (ab Anfang der Schmelzperiode) bildet, wobei dieser Prozess regelbar ist. Das erhöht die Nutzungseffizienz von KSM beim Elektroschmelzen und verbessert die Kenndaten des Stahlschmelzens im LBO, darunter auch hinsichtlich des Strom- und Eisensatzverbrauchs.

Der Kohlenstoff ist in zwei Zuständen - als atomarer (aufgelöster) und als freier Kohlenstoff - im "flüssigen" Aufkohlmittel enthalten. Der atomare Kohlenstoff ist chemisch mit Eisen verbunden. Beim freien Kohlenstoff handelt es sich um Ultrafeinstaub. Die Anwesenheit dieser Kohlenstoffformen im Aufkohlmittel wird wie folgt erläutert. Einerseits macht sie es möglich, das Aufkohlvermögen des Materials im Vergleich zu potentiellen Aufkohlmitteln wie hochgekohlten Eisenlegierungen, z. B. Eisenguss, mehrfach zu steigern und somit ihren Verbrauch pro Schmelze zu vermindern oder gar zu vermeiden. Andererseits stellt dies die vorausgehende Dispergierung des festen KSM bis zu Feinteilchen im Größenbereich zwischen 10⁻³ und 10⁻⁶ cm sowie die Aufrechterhaltung seiner höchsten Aktivität nahe 1 sicher. Weiterhin gewährleistet dies eine schnelle Auflösung von Kohlenstoff im Metallbad des Ofens nach dem Einbringen des "flüssigen" Aufkohlmittels in das Metallbad und die Gewinnung der eisen- und kohlenstoffhaltigen Schmelze mit einem maximalen Gleichgewichtsgrad. Dadurch wird vermieden, dass Kohlenstoffgruppen, die die Stahlqualität beeinträchtigen, im Metall zurückbleiben.

Der gewählte Konzentrationsbereich des gesamten Kohlenstoffanteils in der Kohlenstofflösung im Eisen liegt zwischen 2 und 30%. Ein geringerer Kohlenstoffanteil unter 2% ist ungünstig, weil in diesem Fall die Schwerschmelzbarkeit des Aufkohlmittels zunimmt und die Konzentration des Grundelements - Kohlenstoff - zu gering wird. Das beeinträchtigt die Effizienz des Verfahrens. Ein erhöhter Kohlenstoffanteil über 30% erschwert den Eingang dieses Aufkohlmittels aus seiner Bildungszone im Metallbad infolge der unzureichenden Fließfähigkeit des geschmolzenen Aufkohlmittels, weil es feste Kohlenstoffteilchen enthält.

Der gesamte Karbonisiermittelverbrauch (Verbrauch des flüssigen Aufkohlmittels) pro Schmelze wird zwischen 1 und 20% der Beschickungsgutmasse festgelegt. Bei einem geringeren Karbonisiermittelverbrauch - unter 1% - nimmt der Kohlungseffekt ab, weil ungenügend Kohlenstoff ins Metall eintritt. Ein erhöhter Karbonisiermittelverbrauch - über 20% - ist nicht zweckmäßig, weil der Kohlenstoffanteil im Metallbad aufgrund der Bildung einer großen Aufkohlmittelmenge eine zu hohe Konzentration erreicht.

Die Zuführung von eisen- und kohlenstoffhaltigen Materialien zum Ofen im Laufe des Eisensatz-Schmelzvorgangs und die nachfolgende Erwärmung der Materialien, die Eisenreduktion und -kohlung, die Bildung der Kohlenstofflösung im flüssigen Eisen (d. h. Bildung des "flüssigen" Aufkohlmittels) fallen beim beanspruchten Verfahren im Unterschied zum bekannten Stand der Technik zeitlich und räumlich zusammen. Sie verlaufen parallel und gleichzeitig. Das beanspruchte Verfahren ermöglicht es, den bekannten anschließenden Kohlungsvorgang mit festem KSM durch die gleichzeitige Kohlung teilweise oder gegebenenfalls völlig zu ersetzen. Eine derartige gleichzeitige Kohlung zeichnet sich durch eine höhere Geschwindigkeit und erhöhte Wirksamkeit aus.

Die Vereinigung aller Schritte des Kohlungsvorgangs gemäß dem beanspruchten Verfahren zur Stahlschmelze im LBO wird dadurch sichergestellt, dass die eisen- und kohlenstoffhaltigen Materialien in die heißere Zone des Ofens geführt werden. Hier wird viel mehr Wärme abgegeben, weil die zugeführte elektrische Energie in Wärmeenergie umgesetzt wird. Dadurch fallen die Wärmeabgabezone und die Prozesszone zusammen. Die Reaktion zwischen den zugeführten Materialien läuft dabei unter der Bildung der flüssigen Kohlenstofflösung im Eisen, d. h. des "flüssigen" Aufkohlmittels, in der Prozesszone des Ofens ab. Folglich wird die Kohlung des Metalls bereits ab Anfang des Schmelzens wesentlich erleichtert. Dementsprechend fängt die Metallbadentkohlung gleichzeitig mit dem Schmelzen an und dauert bis zum Schmelzende. Dadurch werden das Sieden und die Vermengung von Metall und Schlacke während des gesamten Schmelzvorgangs einschließlich der Schmelzperiode sichergestellt. Das Ergebnis ist die Herabsetzung des Energieverbrauchs und die Steigerung der Eisenausbeute aus dem Beschickungsgut.

Die Größe der Zone, der die Ausgangsstoffe zugeführt werden, darf D=d_{A}+6d_{el.} nicht überschreiten. Eine weitere Vergrößerung dieser Zone führt dazu, dass das Material in kühlere Bereiche kommt, dass die Materialien zusammenkleben und dass an den Ofenwänden Konglomerate entstehen. Ihr Durchschmelzen bedarf eines zusätzlichen Zeit- und Energieaufwands und vermindert somit die Effizienz des Verfahrens.

Das beanspruchte Verfahren zur Stahlschmelze im Lichtbogenofen schließt folgende aufeinanderfolgende Schritte ein: Füllung des Ofens, Begichtung des Wärmeraums des Ofens mit festem Eisensatz und mindestens festem kohlenstoffhaltigen Material zwecks Metallkohlung, Schmelzen des Beschickungsguts mittels der Lichtbögen und Kohlung des Metalls mit kohlenstoffhaltigen Materialien im Laufe des Schmelzvorgangs, Abstechen. Dabei wird ein Karbonisiermittel gleichzeitig mit dem Beginn des Anschmelzens des Beschickungsguts der aus dem Eisensatz gebildeten Metallschmelze zugeführt. Das Karbonisiermittel wird dabei in Form der flüssigen Phase des in der Brennzone der Lichtbögen reduzierten Eisens zugegeben. Der Gesamtanteil von atomarem und ungebundenem Kohlenstoff in der flüssigen Eisenphase beträgt max. 30%. Somit wird eine zusätzliche gleichzeitige Kohlung des Metalls mit einer anderen Art des Aufkohlmittels sichergestellt.

Das Karbonisiermittel in Form der flüssigen Phase des in der Brennzone der Lichtbögen reduzierten Eisens wird aus Eisenoxiden und dem kohlenstoffhaltigen Material mit der Korngröße von max. 25 mm gewonnen. Die Eisenoxide und das kohlenstoffhaltige Material werden der Brennzone der Lichtbögen und den angrenzenden Bereichen (der heißesten Zentralzone des Ofens) zugeführt. Die Größe der Brennzone darf dabei D=d_{A}+6d_{el.} nicht überschreiten, wobei d_{A} der Durchmesser der Elektrodenauflösung und d_{el.} der Elektrodendurchmesser sind. Der gesamte Karbonisiermittelverbrauch pro Schmelze liegt bei max. 20% der Eisensatzmasse. Das Karbonisiermittel wird der Metallschmelze im Laufe des Schmelzvorgangs des Beschickungsguts zugegeben. Dabei wird der Anfang der Karbonisiermitteleinbringung mit dem Beginn des Schmelzvorgangs vereinigt, oder das Karbonisiermittel wird der Metallschmelze im Laufe des Schmelzvorgangs zugeführt. Um den besten technischen Effekt zu erreichen, werden Eisenoxide und das kohlenstoffhaltige Material vor dem Einbringen in den Ofen vermengt und in Form einer dichten Mischung zugeführt. Um die Reaktion der Karbonisiermittelbildung zu beschleunigen, ist es zweckmäßig, Eisenoxide und das kohlenstoffhaltige Material vorher stückig zu machen.

Als Eisensatz werden feste Stoffe mit Metalleisen als Grundmaterial verwendet. Zu solchen festen Stoffen gehören Stahlschrott, Hochofeneisen, Kunstverbundstoffe, Altmetall, spezifisches vorbereitetes Beschickungsgut, verschiedene Metallabfälle sowie direkt reduziertes Eisen in Form von metallisierten Pellets, Eisenschwamm, Frischeisen, teilweise reduziertes Eisenerz.

Das kohlenstoffhaltige Material wird dem Wärmeraum des Ofens gleichzeitig mit den eisenhaltigen Materialien im Laufe des Schmelzvorgangs zugeführt, um Karbonisiermittel zu erzeugen. Als kohlenstoffhaltiges Material werden Koks, Graphit, Anthrazit, Thermoanthrazit, Steinkohle, Pflanzenkohle, Abfälle der metallurgischen, chemischen Produktion usw., die Kohlenstoff als Grundelement enthalten, darunter Abfallkoks, Elektrodenbruch, verwendet. Dieses Material wirkt als Kohlenstoffquelle. Der Kohlenstoff erfüllt dabei gleichzeitig zwei Funktionen: Er wirkt als Reduktionsmittel für das Eisen aus Eisenoxiden und als Aufkohlelement - Karbonisiermittel - in Bezug auf die Eisenschmelze, die aus dem Eisensatz entsteht.

Die eisenhaltigen Materialien schließen feste Oxidationsmittel ein, die Eisenoxide Fe₂O₃, Fe₃O₄, FeO enthalten. Die typischen Vertreter dafür sind Eisenerze, Konzentrate, Superkonzentrate, Sinterprodukte und ihre Mischungen sowie metallene Eisenteilchen, die während der Stahlproduktion und -verarbeitung entstehen, und zwar Stahlspäne, Gusseisenspäne, Eisenkörner (Regulus), die der Schlacke entnommen werden, Metallabfall, der beim Metallschneiden entsteht, usw.

Die Eisenoxide bilden infolge ihrer carbothermischen Reduktion direkt reduziertes flüssiges Metalleisen, das gleichzeitig aufgekohlt wird und danach in das Metallbad kommt und es aufkohlt. Dafür überschreitet der KSM-Anteil in der Gesamtmenge der zugeführten eisen- und kohlenstoffhaltigen Materialien den stöchiometrischen Wert gemäß der Reduktionsreaktion (Fe₂O₃)+3C=2[Fe]+3{COg}. Dieser Wert ist 321 kg Kohlenstoff pro 1 Tonne Eisen.

Gemäß dem beanspruchten Verfahren wurden einige Schmelzserien der Stähle 17G1S-U und 22G21-7 im modernen Lichtbogenofen, Typ DSP-160, mit einer Nenn-Aufnahmekapazität von 175 Tonnen Beschickungsgut durchgeführt. Der Ofen wurde mit 100% festem Beschickungsgut nach einem Verfahren mit flüssigem Metallrest und Schlacke ("Sumpf) betrieben. Parallel zu Versuchsschmelzen nach dem beanspruchten Verfahren wurden auch Referenzschmelzen mit Stahlerzeugung des gleichen Sortiments vorgenommen. Das Referenzschmelzen des Stahls wurde nach den aktuellen technischen Dokumentationen unter Verwendung moderner Sauerstoff- und Injektionstechnologien durchgeführt. Die Versuchsschmelzen wurden bei gleichen energie- und verfahrenstechnischen Parametern wie die Referenzschmelzen geführt, d. h., es wurden keine zusätzlichen energie- und verfahrenstechnischen Parameter verwendet, um das Karbonisiermittel zu gewinnen.

Im Unterschied zum bekannten Verfahren wurde nach dem beanspruchten Verfahren eine parallele Karbonisierung des Metalls mit flüssigem Aufkohlmittel zusätzlich zur Kohlung des Metalls vorgenommen. Die parallele Karbonisierung wurde durch die Zugabe von Feinkoks der ursprünglichen Metallbeschickung (der erste Kübel) erreicht. Das flüssige Aufkohlmittel wurde unmittelbar im Ofen erzeugt. Dafür wurden eisen- und kohlenstoffhaltige Materialien in Form von Zunder und Feinkoks während der Schmelzperiode dem Ofen zugeführt. Der Gesamtverbrauch des erzeugten Karbonisiermittels pro Schmelze betrug bis zu 20% der Beschickungsgutmasse.

Diese Materialien wurden der Brennzone der Lichtbögen von oben durch eine Öffnung im Ofengewölbe zugeführt. Die Brennzone befindet sich in der heißen Zentralzone des Ofens, die 4,5 m groß ist. Das entspricht den Parametern der Anmeldung, wonach der Durchmesser dieser Zone D=d_{A}+6d_{el.} nicht überschreiten darf. Der Feinkoksgehalt in der gesamten Menge der zugeführten Materialien betrug 4 - 48%.

Ein Teil der Schmelzen wurde mit voreilender Feinkokszuführung anstelle der Zunderzuführung durchgeführt. Ein anderer Teil der Schmelzen wurde mit gleichzeitiger Feinkoks- und Zunderzuführung durchgeführt. Darüber hinaus wurden Feinkoks- und Zunderzuführung in Form eines Gemischs, darunter auch nach ihrem Stückigmachen - in Form von Briketts mit Abmessungen von 60 x 60 x 80 mm - vorgenommen. Als Bindemittel wurde Zement in einer Menge von 8 - 12% der Brikettmasse bei der Brikettfertigung verwendet. Ein großer Teil der Feinkoks- und Zunderteilchen war 0,5 - 1,0 mm groß.

Die Zuführung der Materialien in einer Gesamtmenge von 1 - 20% zum Ofen wurde 1 bis 3 Min. ab Einschalten der Stromversorgung und Anfang der Bildung von freien Lückenbereichen in der oberen Schicht der Metallbeschickung begonnen. Die freien Lückenbereiche entstehen im Umfang der Metallbeschickung infolge des Aufschmelzens des festen Beschickungsguts und seines Übergangs in den flüssigen Zustand. Folglich wird ein Teil des durch das Beschickungsgut eingenommenen Umfangs frei gemacht. Die Ausgangskomponenten - Zunder und Feinkoks - kamen in die Brennzone der Lichtbögen, wurden bis zu Hochtemperaturen erhitzt und reagierten miteinander. Die Produkte der carbothermischen Zusammenwirkung waren flüssiges direkt reduziertes Eisen und Kohlenoxid. Das reduzierte Eisen wurde aufgrund des beachtlichen Überschusses an Kohlenstoff aufgekohlt und bildete das flüssige Aufkohlmittel. Das letztere bestand aus der gesättigten Kohlenstofflösung im Eisen und der darin dispergierten festen Phase in Form von Ultrafeinstäuben von Graphit, wobei ein kolloiddisperses System gebildet wurde. Die hochgekohlte Schmelze mit bis zu 30% Kohlenstoffgehalt ging in das Metallbad über und kohlte dabei das Metall ab Beginn des Eisensatzanschmelzens und im Laufe des gesamten Schmelzprozesses auf. Das während der carbothermischen Reduktion der Eisenoxide ausgeschiedene Kohlenoxid wurde teilweise bis zu CO₂ mit Wärmeabgabe nachgebrannt. Diese Wärme erreichte die im Ofen geschmolzenen Materialien und erwärmte diese zusätzlich, wodurch der Stromverbrauch reduziert wurde.

Während des Schmelzvorgangs wurden die technischen Betriebsdaten des LBO, darunter die gesamte Schmelzzyklusdauer, die Ofenbetriebszeit unter Strom, Leerzeiten, Verbrauchswerte für Einsatzstoffe, Strom, Naturgas, Sauerstoff, Aufkohlmittel, eisen- und kohlenstoffhaltige Komponenten, die im Laufe des Schmelzvorgangs zugegeben wurden, Kalk, Zusammensetzung von Metall und Schlacke usw. festgestellt. Die zusammengefassten technisch-wirtschaftlichen Kennziffern der Schmelzen gemäß dem beanspruchten und dem bekannten Verfahren mit gleichen Beschickungsgutparametern sind in Tabelle A enthalten.

Die Ergebnisse der Versuchsschmelzen zeigen, dass das vorgeschlagene Verfahren die erhöhte Ausbeute des flüssigen Metalls und den Rückgang des Stromverbrauchs dank dem erhöhten Kohlenstoffanteil im Laufe des Schmelzvorgangs sowie die Verminderung des Sauerstoffgehalts im Metall beim Abstechen sicherstellt. Dies ist die Folge der zusätzlichen Metallkohlung mit Hilfe des flüssigen Aufkohlmittels, das unmittelbar aus den dem Ofen zugeführten eisen- und kohlenstoffhaltigen Komponenten gewonnen wird.

Der niedrigere Oxidationsgrad von Metall und Schlacke ist durch den erhöhten Kohlenstoffanteil im Metall im Laufe des Aufschmelzens des Metallbads bedingt und stellt eine bessere Stahlqualität hinsichtlich des Gehalts von nichtmetallischen Oxideinschlüssen sicher.

Die Gegenüberstellung der technischen Daten des beanspruchten Stahlschmelzverfahrens mit denen aus dem Stand der Technik bestätigt die Wirksamkeit des Verfahrens gemäß der Erfindung.

Der grundsätzliche Unterschied zwischen dem beanspruchten Verfahren zur Stahlschmelze im LBO und dem bekannten Stand der Technik besteht in dem Mechanismus, der Kinetik und der Thermodynamik des Prozesses, wenn Kohlenstoff in das Metall übergeht, sowie insgesamt im Ablauf der Kohlung (Karbonisierung).

Der zusätzliche Kohlungsprozess unterscheidet sich von dem bekannten durch seine besondere Natur, den Mechanismus und die Verhältnisse der Zuführung. Die Ergänzung des Stahlschmelzvorgangs im LBO durch diese zusätzliche Kohlungsweise verändert die Technologie des Elektroschmelzens ganz radikal. Diesem neuen Prozess wird eine dominierende Rolle zugeordnet. Das ist dadurch erklärt, dass die Kohlenstoffoxidation die Hauptreaktion des Stahlschmelzens und die Grundlage sämtlicher moderner Stahlgewinnungsverfahren, darunter auch im LBO, ist. Diese legt dominierende technische Kenndaten des Metallschmelzens fest. Daher ist dies ein wesentliches Merkmal, das die Neuheit und die Relevanz der technischen Lehre definiert.

Aufgrund dieses Ansatzes ermöglicht es das beanspruchte Stahlschmelzverfahren, den Kohlenstoffanteil im Laufe des Schmelzvorgangs zu regeln. Das wäre beim bekannten Stahlerzeugungsverfahren, bei dem die Kohlung mittels festen KSM durchgeführt wird, nicht möglich. Neben der Regelung des Kohlenstoffverhaltens macht das beanspruchte Verfahren es möglich, den Grad der Metallkohlung bereits sofort ab Schmelzbeginn - ab Anfang der Schmelzperiode - wesentlich zu erhöhen. Das schafft Bedingungen für die ununterbrochene Entkohlung des Metallbads während des gesamten Schmelzvorgangs einschließlich der Schmelzperiode, wenn das Metallbad festflüssig ist und sich schlecht erwärmen läßt.

Die Kohlung des Metalls nach dem beanspruchten Stahlschmelzverfahren erfolgt mit Hilfe einer flüssigen Kohlenstofflösung im direkt reduzierten Eisen. Das direkt reduzierte Eisen entsteht unmittelbar im LBO während des Schmelzens des Ausgangseisensatzes aus den dem Ofen zugeführten Materialien mit einer Korngröße von max. 25 mm. Diese Materialien enthalten Eisenoxide und Kohlenstoff als Reduktionsmittel. Beim bekannten Verfahren erfolgt dies dagegen in der Beschickung.

Das feste KSM benötigt eine lange Zeit, um sich im Eisen zu lösen. Die Verwendung der hochgekohlten flüssigen Eisenlegierung anstelle des festen KSM beschleunigt die Kohlung des Metalls wesentlich. Die Gewinnung eines gewissen Kohlenstoffanteils in der infolge des Anschmelzens des Eisensatzes gebildeten Metallschmelze bereits am Anfang des Schmelzvorgangs sorgt für eine frühe und intensive Kohlenstoffoxidation. Das infolge der Entkohlung gebildete Kohlenoxid verursacht Bläschenbildung, Sieden und Vermengung von Metall und Schlacke, so dass das Schmelzen in ein ununterbrochenes Sieden wechselt. Diese Faktoren steigern den Wärmeaufnahmegrad, beschleunigen die Metallerhitzung und vermindern die Energiekosten sowie den Oxidationsgrad von Metall und Schlacke.

Gleichzeitig wird der Eisenabbrand in die Schlacke und den Rauch herabgesetzt, so dass die Ausbeute des Gutprodukts zunimmt.

Die flüssige Kohlenstofflösung im direkt reduzierten Eisen enthält Kohlenstoff neben den üblichen zugleich in anderen Formen. Das liegt am erhöhten Verbrauch des kohlenstoffhaltigen Materials. Ein großer Teil des Kohlenstoffs besteht unter diesen Bedingungen im freien Zustand aus einzelnen 10⁻³-10⁻⁷cm großen Ultrafeinstäuben, die eine einzelne feste Phase bilden. Diese Phase ist in der eisen- und kohlenstoffhaltigen Schmelze ähnlich wie übliches Gusseisen dispergiert. Das liegt daran, dass der im festen KSM enthaltene Kohlenstoff in der Brennzone der Lichtbögen ähnlich wie Gusseisen in Graphit umgesetzt wird, dessen Struktur dem natürlichen Graphit ähnlich ist.

Der Restteil des Kohlenstoffs ist eine Kohlenstofflösung in atomarer (gelöster) Form im Eisen, so dass eine echte Eisen-Kohlenstoff-Lösung entsteht. Die letztere ist durch das Vorhandensein von chemischen Verbindungen zwischen diesen Elementen gekennzeichnet. Daher befindet sich Kohlenstoff in dieser Form in einem gebundenen Zustand im Eisen, so dass eine chemische Verbindung Fe-C gebildet ist. Dank den genannten Besonderheiten unterscheidet sich das beanspruchte Verfahren vom bekannten Stand der Technik durch eine neue Art von Aufkohlmittel, das in flüssiger Form benutzt wird. Bei der Kohlung der Teilchen solcher Art handelt es sich insgesamt um ein kolloiddisperses System, das Phasengrenzen zu Flüssigeisen hat.

In physikalisch-chemischer Hinsicht handelt es sich bei diesem Aufkohlmittel um ein flüssiges System, das aus der gesättigten Kohlenstofflösung im Eisen und der darin dispergierten festen Phase in Form von Graphitteilchen mit einer Korngröße im Bereich von 10⁻³-10⁻⁷ cm besteht. Mit anderen Worten stellt ein derartiges Aufkohlmittel ein kolloiddisperses System dar, bei dem die Kohlenstoffteilchen sowohl in Form von Einzelatomen als auch im freien Zustand in Form von Graphitultrafeinstäuben vertreten sind. Im Unterschied zur echten Eisen-Kohlenstoff-Lösung haben die Graphitultrafeinstäube Phasengrenzen zu Flüssigeisen. Die Eigenschaften ähnlicher Systeme sind detailliert studiert und in einer Monografie beschrieben [Eigenschaften der Eisenschmelzen. A.A.Vertman, A.M.Samarin. Verlag Nauka 1969, 1-280].

Der gesamte Kohlenstoffanteil innerhalb von 2 - 30% im flüssigen Aufkohlmittel überschreitet wesentlich die Kohlenstoffkonzentration in eisen- und kohlenstoffhaltigen Schmelzen, die beim Stahlschmelzen benutzt werden. Dadurch wird sein Aufkohlvermögen im Vergleich zu Gusseisen beachtlich erhöht, das sich durch den höchsten Kohlenstoffanteil auszeichnet. Daher ist dieses Merkmal für die Erfindung wesentlich. Es macht es möglich, den maximalen Metallkohlungsgrad im Vergleich zu anderen potentiellen Aufkohlmitteln auf der Basis eines Eisen-Kohlenstoff-Systems zu erreichen.

Im Laufe des Schmelzvorgangs im LBO werden eisen- und kohlenstoffhaltige Materialien in einer Menge von 1 - 20% der Eisensatzmasse zugegeben. Diese Menge stellt die Gewinnung des "flüssigen" Karbonisiermittels sicher. Die Anwesenheit der Eisenoxide und des kohlenstoffhaltigen Materials in den zugegebenen Materialien in angegebenen Mengen schafft erforderliche und hinreichende Bedingungen dafür, dass die Reaktion der carbothermischen Eisenreduktion mit einer hohen Geschwindigkeit verläuft und dass reduziertes flüssiges Eisen gewonnen und aufgekohlt wird. Die dabei entstehende hochgekohlte Eisenschmelze mit einer Kohlenstoffkonzentration zwischen 2 und 30% stellt ein Aufkohlmittel besonderer Art dar. Es unterscheidet sich vom bekannten festen KSM durch seinen flüssigen Zustand. Deswegen kommt die erzeugte Kohlenstofflösung - "flüssiges" Aufkohlmittel im Eisen - in das Metallbad bereits während der Bildung und kohlt es auf. Die Vorteile dieses Aufkohlmittels gegenüber dem festen sind offensichtlich.

Eines der wesentlichen Merkmale der Erfindung ist der besondere Charakter der Kohlung insgesamt. Beim bekannten Stahlschmelzverfahren mit dem festen KSM als Aufkohlmittel folgen alle Schritte der Reihe nach aufeinander: Eintragung von KSM in das Beschickungsgut, sein Aufschmelzen und Kohlung des flüssigen Metalls. Der Kohlungsablauf gemäß dem beanspruchten Verfahren ist anders gestaltet: Alle Prozesse und Phasen fallen sowohl zeitlich als auch räumlich zusammen, sie verlaufen parallel und gleichzeitig. Diese Prozesse umfassen die carbothermische Reduktion des Eisens aus seinen Oxiden, die Bildung der flüssigen Kohlenstofflösung im direkt reduzierten Eisen, ihr Übergang in das Metallbad und die nachfolgende Kohlung des Metalls, das sich aus dem festen Beschickungsgut nach seinem Aufschmelzen im Ofen bildet. Der vereinigte Verlauf der Kohlungsprozesse im Vergleich zum stufenweisen Verlauf ermöglicht es, die Kohlungszeit und die Dauer der Schmelzperiode zu reduzieren. Dadurch sinken die Energiekosten, und die Eisenausbeute aus dem Beschickungsgut nimmt zu. Daher gehört die Veränderung des Kohlungsverlaufs nach dem beanspruchten Stahlschmelzverfahren zu den wesentlichen Merkmalen.

Die eisen- und kohlenstoffhaltigen Materialien werden der Zentralbrennzone der Lichtbögen und den angrenzenden Bereichen (der heißesten Zone des Ofens) zugeführt. Der Durchmesser dieser Zone darf D=d_{A}+6d_{el.} nicht überschreiten. Die Reaktion der carbothermischen Eisenreduktion aus seinen Oxiden ist energieintensiv und endotherm. Folglich beschleunigen die erhöhte Wärmekonzentration und die Erhöhung der Temperatur den Ablauf der Reaktion und den vollständigen Wechsel der Eisenoxide auf Metallzustand. Die Brennzone der Lichtbögen zeichnet sich durch die höchste Energiekonzentration unter allen Stahlgewinnungsverfahren aus. Diese Konzentration ist durch eine hohe spezifische Leistung in einer Höhe von 10 MVA/m³ oder 1500 kVA/T Metall bedingt.

Die Temperatur in der Brennzone der Lichtbögen liegt laut unterschiedlichen Datenquellen bei ca. 4000 - 15000° K und nähert sich dem kalten Plasma. Die Temperatur auf der Oberfläche des Metallbads, das direkt unter den Elektroden liegt, ist ebenfalls hoch und beträgt ca. 2600° C. Die angeführten Werte überschreiten beachtlich die Schmelztemperatur von Eisen und seiner Legierungen mit Kohlenstoff. Dadurch werden die Bildung des direkt reduzierten Eisens und die Gewinnung der hochkonzentrierten Kohlenstofflösung erleichtert. Daher ist die beanspruchte Zuführung von Eisenoxiden und Reduktionsmittel der Zentralzone im LBO, die die Grundlage der eisen- und kohlenstoffhaltigen Materialien bildet, ein wesentliches Merkmal der beanspruchten technischen Lösung.

Die heißeste Zone des Ofens zeichnet sich durch enorme Energiekonzentration und Temperatur aus. Der zusätzliche Vorteil dieser technischen Lösung besteht darin, dass das der heißesten Zone zugeführte Material die Aufnahme der beim Brennen der Lichtbögen ausgelösten Wärme beachtlich erhöht. Somit nimmt die Dichte des Beschickungsguts zu. Dadurch werden die Wärmeverluste reduziert und die Energiekosten herabgesetzt. Unter Beachtung dieses Faktors gilt die Einbringung der Materialien in die Zentralzone des Ofens als ein sehr wesentliches Merkmal des neuen Stahlschmelzverfahrens.

Besonders wichtig und relevant ist die Einbringung der eisen- und kohlenstoffhaltigen Stoffe in die heißeste Zentralzone des Ofens im Hinblick auf die Vervollkommnung der Energieeigenschaften des LBO. Dabei werden die Verhüttungsmaterialien der Brennzone der Lichtbögen zugeführt, deren Wärmeverhältnisse dem Kaltplasma nahe sind. Dadurch fallen die Hochtemperaturzone der Wärmeerzeugung und die Prozesszone zusammen. Während des Prozesses werden die kalten Ausgangsstoffe erwärmt. Es entsteht eine Kohlenstofflösung mit einer hohen - bis zu 30%igen - Kohlenstoffkonzentration im flüssigen Eisen. Das zeitliche und räumliche Zusammenfallen der Wärmeerzeugungszone und der Prozesszone, die die zugeführte Wärme ausnutzt, schafft fast ideale Bedingungen für die Erhitzung, das Schmelzen, die Eisenreduktion und -kohlung sowie für die Gewinnung des "flüssigen" Aufkohlmittels. Das verändert radikal die wärmespezifischen Schmelzverhältnisse, beschleunigt die Wärmeübertragung von den Lichtbögen zu den zugeführten Materialien und vermindert die Wärmeverluste.

**Tabelle A**

| Pos. Nr. | Kennwert | Einheit | Beanspruchtes Verfahren | Prototyp |
|---|---|---|---|---|
| 1 | 2 | 3 | 4 | 5 |
| 1 | Materialverbrauchskennziffer (MVK) | | 1,069 | 1,088 |
| 2 | Verbrauch Eisensatz pro Schmelze | t | 174,97 | 175,60 |
| 3 | Verbrauch eisen- und kohlenstoffhaltige Stoffe im Laufe des Schmelzvorgangs | % | 1-20 | 18,3 |
| 4 | Gesamte Schmelzdauer | Min. | 71,6 | 74,0 |
| 5 | Schmelzdauer unter Strom | Min. | 44,0 | 44,3 |
| 6 | Spezifischer Stromverbrauch im LBO | kW*h/t | 410,8 | 418,3 |
| 7 | Spezifischer Sauerstoffverbrauch | nm³/t | 32,28 | 33,3 |
| 8 | Spezifischer Verbrauch kohlenstoffhaltigen Materials | kg/t | 7,18 | 7,30 |
| 9 | Spezifischer Naturgasverbrauch | m³/t | 7,2 | 7,4 |
| 10 | Spezifischer Kalkverbrauch | kg/t | 46,51 | 47,4 |
| 11 | Kohlenstoffanteil in der ersten Probe aus LBO | % | 0,27 | 0,14 |
| 12 | Zusammensetzung Schlacke: | % | | |
| | FeO | | 24,30 | 25,02 |
| | CaO | | 37,70 | 36,7 |
| | MgO | | 2,20 | 2,20 |
| 13 | Sauerstoffanteil im Metall vor dem Abstechen | ppm | 491,7 | 587,8 |
| 14 | Metallmasse beim Abstechen aus dem Ofen | t | 163,9 | 161,6 |
| 15 | Ausbeute Gutprodukt aus dem Eisensatz | % | 93,67 | 92,03 |

## Claims

1. Verfahren zur Stahlschmelze im Lichtbogenofen mit mindestens einer Begichtung des Wärmeraums des Ofens mit festem Eisensatz und mindestens festem kohlenstoffhaltigen Material, Schmelzen des Beschickungsguts mittels der Lichtbögen und Kohlung des Metalls mittels fester kohlenstoffhaltiger Materialien im Laufe des Schmelzvorgangs, Abstechen von Metall und Schlacke aus dem Ofen,
**dadurch gekennzeichnet,**
**dass** der Schmelzvorgang unter Zugabe eines hochgekohlten Karbonisiermittels in Form einer flüssigen Phase des in der Brennzone der Lichtbögen reduzierten Eisens im Wärmeraum des Ofens geführt wird, um eine zusätzliche Metallkohlung zu erreichen, und
**dass** das hochgekohlte Karbonisiermittel dabei aus Eisenoxiden und dem kohlenstoffhaltigen Material gewonnen wird.

2. Stahlschmelzverfahren nach Anspruch 1,
**dadurch gekennzeichnet,**
**dass** der gesamte Kohlenstoffanteil im ungebundenen sowie im aufgelösten Zustand in der flüssigen Eisenphase max. 30% beträgt.

3. Stahlschmelzverfahren nach Anspruch 1,
**dadurch gekennzeichnet,**
**dass** der gesamte Karbonisiermittelverbrauch pro Schmelze max. 20% der Eisensatzmasse beträgt.

4. Stahlschmelzverfahren nach Anspruch 1,
**dadurch gekennzeichnet,**
**dass** Eisenoxide und das kohlenstoffhaltige Material der Brennzone der Lichtbögen zugeführt werden,
**dass** die Größe der Brennzone dabei D=d_{A}+6d_{el.} nicht überschreitet, wobei d_{A} der Durchmesser der Elektrodenauflösung und dei. der Elektrodendurchmesser sind.

5. Stahlschmelzverfahren nach Anspruch 1,
**dadurch gekennzeichnet,**
**dass** das Karbonisiermittel in den Wärmeraum des Ofens kontinuierlich oder periodisch im Laufe des Schmelzvorgangs des Beschickungsguts eingebracht wird.

6. Stahlschmelzverfahren nach Anspruch 1,
**dadurch gekennzeichnet,**
**dass** der Anfang der Karbonisiermitteleinbringung mit dem Anfang des Schmelzens des Beschickungsguts vereinigt ist.

7. Stahlschmelzverfahren nach Anspruch 1,
**dadurch gekennzeichnet,**
**dass** Eisenoxide und das kohlenstoffhaltige Material der Brennzone der Lichtbögen gleichzeitig zugeführt werden.

8. Stahlschmelzverfahren nach Anspruch 1,
**dadurch gekennzeichnet,**
**dass** Eisenoxide und das kohlenstoffhaltige Material vor dem Einbringen in den Ofen vorher miteinander vermengt und in Form eines dichten Gemisches zugeführt werden.

9. Stahlschmelzverfahren nach Anspruch 1,
**dadurch gekennzeichnet,**
**dass** Eisenoxide und das kohlenstoffhaltige Material vor dem Einbringen in den Ofen vorher stückig gemacht und in agglomerierter Form zugeführt werden.

10. Stahlschmelzverfahren nach Anspruch 1,
**dadurch gekennzeichnet,**
**dass** die Teilchengröße der Eisenoxide und des kohlenstoffhaltigen Materials vor dem Einbringen in den Ofen bei max. 25 mm liegt.

11. Stahlschmelzverfahren nach Anspruch 1,
**dadurch gekennzeichnet,**
**dass** der gesamte Kohlenstoffanteil im ungebundenen sowie im aufgelösten Zustand in der flüssigen Eisenphase mind. 2% beträgt.

12. Stahlschmelzverfahren nach Anspruch 1,
**dadurch gekennzeichnet,**
**dass** der gesamte Karbonisiermittelverbrauch pro Schmelze mind. 20% der Eisensatzmasse beträgt.
